# DEMANDE DE BREVET EUROPEEN

(11) **EP 3 000 595 A1**
(43) Date de publication de la demande: **30.03.2016**
(21) Numéro de dépôt: 15186445.1
(22) Date de dépôt: 23.09.2015
(51) Int. Cl.: B32B 5/22, B32B 5/30, B32B 5/32, B32B 27/40

(54) **STRUCTURE EN MATÉRIAU COMPOSITE MULTICOUCHE, SON PROCÉDÉ DE MISE EN OEUVRE ET ARTICLE SANITAIRE AINSI RÉALISÉ**

(30) Priorité: 24.09.2014 FR 1459026; 22.09.2015 FR 1558920
(71) Demandeur: Société Française d'Assainissement - SFA, 75007 Paris (FR); Ballestra, Victor Jean, 91430 Vauhallan (FR)
(72) Inventeur: BALLESTRA, Victor Jean, 91430 VAUHALLAN (FR); GOLDSTRICH, Francis Roger, 13007 MARSEILLE (FR)
(74) Mandataire: Petit, Maxime

(57) **Abrégé**

La structure (1) en matériau composite multicouche comprend la superposition des couches suivantes :
-une première couche (3) d'un matériau de type polyurée réalisée à partir d'un polyisocyanate et d'une résine polyamine,
-au moins une deuxième couche (4, 5, 7, 8) d'un matériau de type mousse de polyuréthane réalisée à partir d'un polyisocyanate et d'un polyol, et renfermant des éléments de renfort sous forme de fibres,
-au moins une troisième couche (6) d'un matériau de type mousse de polyuréthane réalisée à partir d'un polyisocyanate et d'un polyol, renfermant des granulats.

Ces différentes couches sont appliquées, de préférence par pulvérisation de leurs constituants, dans un moule ouvert et permettent notamment la réalisation d'un article sanitaire, tel que receveur de douche, baignoire, vasque, plan de travail ou revêtement de sol ou mural.

## Description

La présente invention concerne les matériaux du domaine sanitaire, et se rapporte plus particulièrement à un matériau composite en vue de la réalisation d'un article sanitaire, tel que baignoire, vasque, receveur de douche, plan de travail ou protection murale. La présente invention concerne également le procédé de fabrication dudit matériau.

Dans le domaine sanitaire la céramique était depuis longtemps le matériau le plus utilisé, en raison de ses propriétés de résistance, de facilité de nettoyage, ou encore de coût, mais présente notamment l'inconvénient d'une déformation après cuisson, d'une impossibilité de fabriquer des articles de grandes dimensions, et d'un contact froid pour l'usager.

Plus récemment ont été réalisés des articles en matériaux de synthèse, à base de polymères, ainsi que des articles en matériaux composites pouvant inclure des polymères et des charges minérales et/ou des fibres.

Parmi ces derniers ont notamment été proposés des matériaux multicouche thermoformés comme par exemple des résines acryliques telles que le polyméthacrylate de méthyle (PMMA) co-extrudé sur de l'ABS (Acrylonitrile Butadiène Styrène). Ces matériaux sont utilisés en particulier pour la réalisation de baignoires et de receveurs et cabines de douche. Ils présentent cependant des problèmes de retrait de leurs composants.

Par ailleurs, en ce qui concerne la réalisation de structures multicouches en matériaux polymères, l'enseignement du document WO-A-94 14587 incite plutôt l'Homme du métier à mettre en oeuvre la même composition de base pour toutes les couches, pour éviter une délamination.

On connaît également des articles sanitaires réalisés en résine polyester et fibres de verre sur un châssis métallique. La fabrication de tels articles nécessite de multiples interventions de l'opérateur pour réaliser les différentes couches.

Par ailleurs, d'autres articles sanitaires sont fabriqués en matériau massif appelé "béton de résine", il s'agit d'une résine polyester dans laquelle est incorporée une forte proportion (de l'ordre de 80 %) d'une poudre minérale (par exemple poudre de carbonate de calcium appelée aussi poudre de marbre) ou métallique (par exemple poudre d'aluminium). Le moulage de ce matériau très lourd est très long (6 à 10 heures) et nécessite, par conséquent, de grandes surfaces d'atelier et un travail en 3 x 8 heures pour des fabrications en grandes séries. Il est ensuite difficile pour l'installateur de découper ce "béton de résine" si un ajustement dimensionnel est requis lors de la pose.

En ce qui concerne les receveurs de douche, la tendance actuelle, avec la mode des douches dites "à l'italienne" est de proposer des receveurs de grandes dimensions et les plus minces possibles. Cependant cette réduction d'épaisseur ne doit pas se faire au détriment de la résistance mécanique (telle que stabilité géométrique, résistance à la flexion et aux chocs) de ces structures en matériau composite.

Par ailleurs, les constructeurs cherchent à élaborer des articles de plus en plus légers, pour limiter les problèmes de manutention ainsi que les coûts de transport.

Cependant, dans la plupart des cas, l'incorporation d'une armature métallique est requise pour les articles sanitaires à base de polymères pour lesquels les contraintes mécaniques sont importantes, tels que des receveurs de douche ou des baignoires.

En ce qui concerne les articles sanitaires, les résistances aux agents de nettoyage, aux acides, aux solvants, aux produits alcalins tels que les agents de débouchage de canalisation, aux agents colorants (teinture pour cheveux par exemple) sont aussi des facteurs importants.

La présente invention a donc pour but de pallier les inconvénients précédents en proposant un matériau pour la réalisation d'articles sanitaires par un procédé plus simple et rapide que les procédés actuels.

Un autre but de la présente invention est de fournir un matériau qui soit léger et résistant (notamment à la flexion, aux chocs, aux agents chimiques, aux rayures), et qui permette de réaliser des articles sanitaires d'épaisseur réduite.

Un autre but de l'invention est aussi de fournir un matériau structurel composite qui ne nécessite pas l'incorporation d'une armature métallique en son sein, et qui puisse être facilement adaptable par découpe par l'installateur, pour un ajustement aux dimensions requises sur site.

A cet effet, la présente invention propose une structure en matériau composite multicouche à base de polyurée et de polyuréthane, notamment pour la réalisation d'article sanitaire tel que receveur de douche, baignoire ou revêtement de sol ou mural, caractérisée en ce qu'elle comprend la superposition des couches suivantes :
- au moins une première couche d'un matériau de type polyurée réalisée à partir d'un polyisocyanate et d'une résine polyamine,
- au moins une deuxième couche d'un matériau de type mousse de polyuréthane réalisée à partir d'un polyisocyanate et d'un polyol, et renfermant des éléments de renfort sous la forme de fibres,
- au moins une troisième couche d'un matériau de type mousse de polyuréthane réalisée à partir d'un polyisocyanate et d'un polyol, (différente de ladite deuxième couche) et renfermant des éléments de renfort sous la forme de granulats.

Il est apparu que la superposition d'une couche de polyurée et d'au moins une couche de polyuréthane ne présente pas de délamination.

La première couche en polyurée, qui est destinée à constituer la face extérieure de la structure, présente une bonne résistance aux agents chimiques tels que les acides et les bases, ainsi qu'aux agents de blanchiment et une bonne résistance aux rayures.

De préférence, la structure selon l'invention comprend plusieurs dites deuxièmes couches en mousse de polyuréthane de haute densité, dont seules certaines renferment des fibres de renfort.

Par haute densité on entend ici une densité de la mousse de polyuréthane de préférence supérieure ou égale à 0,50, une densité de préférence encore supérieure ou égale à 0,65, une densité de préférence encore supérieure ou égale à 0,80. Les valeurs de densité ci-dessus sont données à 20 °C.

Lesdites fibres de renfort présentes dans au moins une desdites deuxièmes couches de la structure, peuvent être des fibres tissées ou non tissées, de préférence choisies parmi des fibres de verre, des fibres de carbone, des fibres d'aramide ou un mélange de ces fibres.

Les granulats présents dans au moins une desdites troisièmes couches de la structure peuvent être choisis parmi des granulats minéraux et/ou des granulats métalliques et/ou des granulats polymères, tels que des granulats obtenus par broyage de chutes de production ou de recyclage d'articles en matériaux polymères thermodurcissables ou thermoplastiques, par exemple issus de plaques en ABS et/ou en PMMA. Néanmoins, tous les matériaux de recyclage rebroyables sont possibles, à concurrence d'un surpoids acceptable et de l'aptitude à la découpe du matériau composite final ainsi constitué.

Parmi les granulats métalliques, les granulats non-ferreux (tel que la limaille d'aluminium) sont préférés pour éviter les problèmes de rouille éventuel en milieu humide des salles de bain. Les granulats obtenus par broyage de chutes de production ou de recyclage d'articles en matériaux polymères sont néanmoins préférés, en particulier car ils sont plus légers que les granulats minéraux ou métalliques, et permettent une réduction des coûts.

La taille de ces granulats est avantageusement inférieure à 5 mm, de préférence comprise entre 3 mm et 5 mm. L'incorporation de granulats de dimensions supérieures est possible, par exemple de dimensions pouvant aller jusqu'à 10 mm, en particulier lorsqu'une découpe de la structure composite finale n'est pas nécessaire.

Selon une première variante de réalisation de l'invention, la structure en matériau composite multicouche selon l'invention comprend la superposition des couches suivantes :
- au moins une première couche d'un matériau de type polyurée réalisée à partir d'un polyisocyanate et d'une résine polyamine,
- au moins une deuxième couche d'un matériau de type mousse de polyuréthane de haute densité réalisée à partir d'un polyisocyanate et d'un polyol,
- au moins une troisième couche d'un matériau de type mousse de polyuréthane de faible densité réalisée à partir d'un polyisocyanate et d'un polyol.

La superposition de ces trois types de couches présente les avantages suivants :
- la première couche en polyurée, qui est destinée à constituer la face extérieure de la structure, présente une bonne résistance aux agents chimiques tels que les acides et les bases, ainsi qu'aux agents de blanchiment et une bonne résistance aux rayures ;
- la couche en polyuréthane à haute densité (dénommée aussi polyuréthane compact) qui se trouve au-dessous de la couche en polyurée a une fonction de soutien de la couche de polyurée et confère à la structure résistance et rigidité, même avec une épaisseur de quelques millimètres ;
- la couche en polyuréthane à faible densité qui se trouve au-dessous de la ou des couches en polyuréthane à haute densité a pour fonction d'alléger l'ensemble et donc de réduire le poids global de la structure tout en conférant à ladite structure une certaine "souplesse" et en permettant l'absorption des chocs. De plus, le coût du polyuréthane à faible densité est généralement inférieur à celui du polyuréthane à haute densité.

Avantageusement l'épaisseur totale, dans ladite structure selon l'invention, de la ou les couches de polyuréthane de faible densité (efD) est plus importante que l'épaisseur totale de la ou les couches de polyuréthane de haute densité (eHD).

Plus particulièrement le rapport des épaisseurs efD/eHD peut être compris entre 5 et 20, avec par exemple une épaisseur de la couche de polyuréthane de faible densité (efD) comprise entre 10 mm et 30 mm, et une épaisseur de la couche de polyuréthane de haute densité (eHD) comprise entre 1,5 mm et 2 mm, pour une structure de matériau composite pour receveur de douche.

Par faible densité on entend ici une densité de la mousse de polyuréthane de préférence inférieure à 0,50, de préférence encore inférieure à 0,35, de préférence encore inférieure à 0,30. Selon un mode de réalisation avantageux, on utilise une couche de polyuréthane à faible densité présentant une densité comprise entre 0,15 et 0,35, de préférence comprise entre 0,18 et 0,30. Selon les applications envisagées, une couche de polyuréthane de densité inférieure ou égale à 0,15 peut être considérée comme trop légère et trop souple et ne pas être appropriée pour des articles sanitaires tels que des receveurs de douche ou des baignoires pour lesquels les contraintes mécaniques sont importantes.

Les valeurs de densité ci-dessus sont données à 20 °C.

De manière avantageuse, la structure en matériau composite multicouche selon cette première variante de réalisation de l'invention comprend plusieurs couches en polyuréthane de haute densité, dont certaines renferment des fibres de renfort, qui peuvent être des fibres tissées ou non tissées, et peuvent être choisies parmi des fibres de verre, des fibres de carbone, des fibres d'aramide (Kevlar® par exemple), ou un mélange de ces fibres.

De manière avantageuse également, dans la structure en matériau composite multicouche selon cette première variante de réalisation de l'invention, la ou les couches en matériau polyuréthane de faible densité renferment des éléments de renfort, tels que définis précédemment.

Les proportions en volume de ces granulats dans ladite couche de polyuréthane faible densité sont comprises entre 0 et 50 % environ, de préférence entre 10 et 40 %, de préférence encore entre 15 et 35 %.

La structure en matériau composite multicouche selon la présente invention présente de bonnes propriétés mécaniques (absence de déformation, tenue à la température, dureté de la couche supérieure) avec une masse volumique réduite.

L'épaisseur totale de la structure en matériau composite selon l'invention peut être faible (par exemple inférieure ou égale à 3 cm), tout en présentant une bonne résistance mécanique. La première couche en matériau de type polyurée peut être très fine (par exemple d'épaisseur inférieure à 1 mm) ; après polymérisation elle s'avère résistante aux solvants et aux produits d'entretien habituels.

Selon un mode de réalisation particulier de cette première variante de réalisation de l'invention la structure en matériau composite multicouche peut comporter une couche de polyuréthane faible densité, entourée de (c'est-à-dire prise en sandwich entre) deux couches de polyuréthane à haute densité, l'une des couches de polyuréthane à haute densité étant revêtue, sur sa face opposée à la couche de polyuréthane faible densité d'une couche en matériau de type polyurée.

Une telle disposition des couches de polyuréthane renforce encore la résistance de la structure par écartement des deux couches de polyuréthane compact (haute densité, couches structurelles), par la couche de polyuréthane plus légère (faible densité) conférant ainsi une inertie importante aux chocs pour un poids limité.

Selon une deuxième variante de réalisation de l'invention, ladite troisième couche de la structure en matériau composite multicouche est un matériau de type mousse de polyuréthane de haute densité renfermant des granulats légers.

Par rapport à la structure multicouche de la première variante de l'invention, la présence de granulats légers dans une mousse de polyuréthane de haute densité permet notamment d'alléger la dite troisième couche, tout en conférant résistance à la structure, grâce à la haute densité de la mousse de polyuréthane. Ils permettent aussi de diminuer la quantité de matière polymère, et de réduire ainsi les coûts en matériaux.

De plus, si la structure est réalisée avec les dites deuxième(s) et troisième(s) couches en mousse de polyuréthane de densités identiques, et si les réactifs de départ (polyisocyanate et polyol) sont les mêmes, l'approvisionnement est simplifiée et les coûts de fabrication encore réduits.

Ces granulats légers peuvent être choisis parmi des granulats de polystyrène expansé, graphité ou non, d'argile expansée, de liège, ou tout autre matériau polymère de recyclage léger, ou un mélange de ceux-ci. La densité de ces granulats est avantageusement inférieure à la densité de la mousse de polyuréthane haute densité dans laquelle ils sont incorporés.

Comme indiqué précédemment, la taille de ces granulats légers est avantageusement inférieure à 10 mm, de préférence inférieure ou égale à 5 mm pour une meilleure propreté de la découpe de la structure composite lors de l'installation.

Dans un mode de réalisation particulier, les granulats incorporés à ladite troisième couche peuvent comprendre une fraction de granulats légers et une fraction de granulats lourds (c'est à dire de densité supérieure aux granulats dits légers), par exemple de densité supérieure à la densité de la mousse de polyuréthane haute densité dans laquelle ils sont incorporés. Avantageusement la fraction massique des granulats légers est supérieure à la fraction massique des granulats lourds. En effet, le fabricant peut être amené à augmenter la proportion de granulats pour réduire la quantité de matériau polymère de la ou les dite(s) troisième(s) couche(s), mais sans réduire de manière importante le poids total de la structure, qui donnerait à l'acheteur ou l'utilisateur une impression de moindre qualité et/ou de moindre résistance de ladite structure. Il peut ainsi jouer sur les proportions relatives des granulats légers et lourds pour obtenir le poids de structure multicouche souhaité.

Selon un mode de réalisation avantageux de cette deuxième variante de réalisation de l'invention, la structure en matériau composite multicouche comporte une couche de mousse de polyuréthane renfermant des granulats légers, entourée de deux couches de mousse de polyuréthane à haute densité renfermant des fibres tissées, dont l'une des couches est revêtue, sur sa face opposée à la couche de polyuréthane à granulats légers, d'une couche en matériau de type polyurée.

La présente invention concerne également un article sanitaire, tel que receveur de douche, baignoire ou revêtement de sol ou revêtement mural, formé d'une structure en matériau composite multicouche telle que décrite ci-dessus, caractérisé en ce que ladite première couche en matériau de type polyurée constitue la couche extérieure. La surface de ladite couche extérieure, en fonction de l'usage envisagé, peut être "antidérapante" par la présence de motifs ou de reliefs. Elle peut également présenter un aspect imitant, par exemple l'ardoise, le cuir, le bois...

La présente invention se rapporte également au procédé de fabrication d'une structure composite multicouche, ou de l'article sanitaire, tels que décrits ci-dessus, par pulvérisation, dans un moule ouvert, de ses matériaux constitutifs, qui comprend les étapes successives suivantes :
- pulvérisation d'un premier polyisocyanate, de préférence un polyisocyanate aliphatique, et d'une résine polyamine pour former au moins une première couche (de type gelcoat) en résine polyurée à la surface du moule,
- pulvérisation, sur ladite première couche, d'au moins un deuxième polyisocyanate et d'un polyol pour former au moins une deuxième couche d'un matériau en mousse de polyuréthane à haute densité,
- pulvérisation, sur ladite deuxième couche, d'au moins un troisième polyisocyanate et d'un polyol pour former au moins une troisième couche d'un matériau en mousse de polyuréthane à faible densité,
- séchage de l'ensemble et démoulage du matériau multicouche.

De manière avantageuse, la pulvérisation des polyisocyanates et des polyols pour former les couches de polyuréthane a lieu immédiatement après l'application de la couche précédente et avant le séchage de cette dernière. Il n'y a donc pas d'étape de séchage entre les différentes étapes de pulvérisation, l'application consécutive immédiate de la couche suivante permet aux différentes couches de s'interpénétrer, et de sécher simultanément en évitant en particulier une dilatation ou un retrait d'une des couches par rapport à la couche adjacente.

Il en résulte également un gain de temps de production, puisqu'il n'y a pas d'attente entre les applications de chacune des différentes couches. Ainsi, le temps de fabrication est d'une dizaine de minutes contre plusieurs heures avec les procédés de l'art antérieur, notamment le procédé de "béton de résine".

De préférence des fibres et/ou des éléments de renfort sont ajoutés lors de la pulvérisation des polyisocyanates et des polyols pour former les couches de polyuréthane. Des couches avec et sans éléments de renfort peuvent avantageusement être superposées.

Pour les couches de polyuréthane haute densité, le polyisocyanate est de préférence un polydiisocyanate, tel que par exemple le polydiisocyanate de diphénylméthane.

Il s'est avéré intéressant de mettre en oeuvre le procédé décrit ci-dessus au moyen d'un moule en élastomère, de préférence en élastomère de silicone souple. Un tel moule autorise différents types d'aspect extérieur de l'article sanitaire: en effet il peut permettre en particulier de mouler la couche de type polyurée en réalisant une surface mate ou brillante, ou encore des motifs imitation pierre, ou encore d'une surface antidérapante. De plus, le démoulage en est facilité grâce à l'inertie chimique du silicone qui prévient les adhérences entre les pièces et le moule sans nécessiter de pulvérisation d'agent démoulant sur ce dernier.

L'invention sera bien comprise à la lecture de la description suivante d'exemples de réalisation, en référence aux dessins annexés dans lesquels :
La figure 1 est un schéma en coupe d'un mode de réalisation de la structure en matériau composite multicouche selon une première variante de l'invention montrant la superposition des différentes couches de matériaux ;
La figure 2 est un schéma en coupe du moule permettant la réalisation d'un article sanitaire par le procédé selon l'invention sous la forme d'un receveur de douche.
La figure 3 est un schéma en coupe d'un mode de réalisation de la structure en matériau composite multicouche selon une deuxième variante de l'invention montrant la superposition des différentes couches de matériaux ;
La figure 4 est un schéma en coupe d'un autre type de moule permettant la réalisation d'un article sanitaire par le procédé selon l'invention sous la forme aussi d'un receveur de douche.

### Exemples :

Les exemples présentés ci-après concernent la réalisation de receveur de douche en matériau multicouche.

### Exemple 1

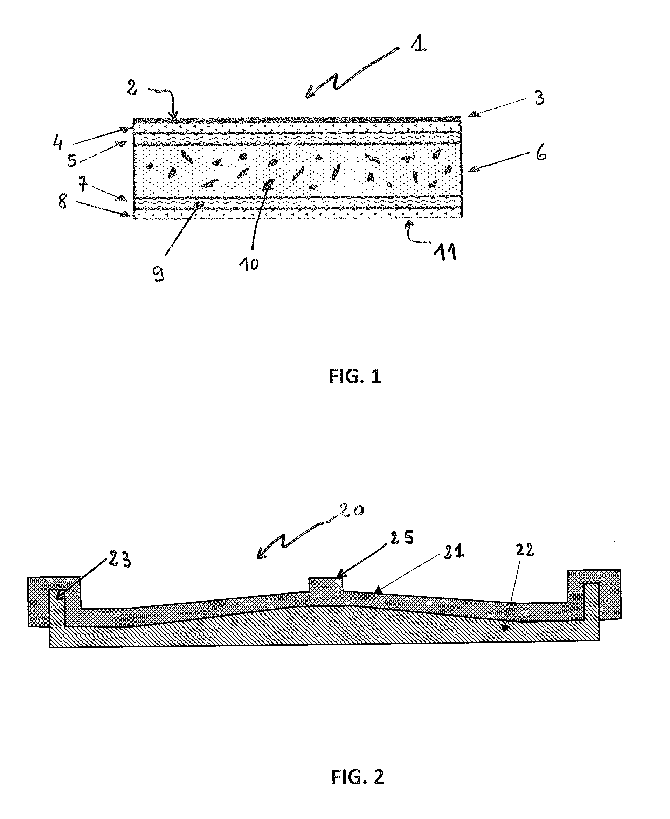

Comme schématisé sur la figure 1, l'exemple de structure 1 en matériau composite multicouche selon une première variante de l'invention se compose du haut vers le bas, c'est-à-dire à partir de la surface extérieure 2 :
- d'une fine couche en polyurée 3 reposant sur deux couches de mousse de polyuréthane à haute densité 4 et 5 ;
- d'une couche en matériau polyuréthane à faible densité 6 formant l'âme de la structure, cette couche de mousse de polyuréthane à faible densité 6 repose elle-même sur deux couches de mousse de polyuréthane haute densité 7 et 8.

Les deux couches de mousse de polyuréthane haute densité 5 et 7 entourant directement la couche de polyuréthane à faible densité 6 renferment ici des fibres 9, par exemple des fibres de verre. La couche de mousse de polyuréthane à faible densité 6 renferme des éléments de renfort sous la forme de granulats 10. Ces granulats sont avantageusement des chutes de production et/ou de recyclage de plaques en ABS/PMMA.

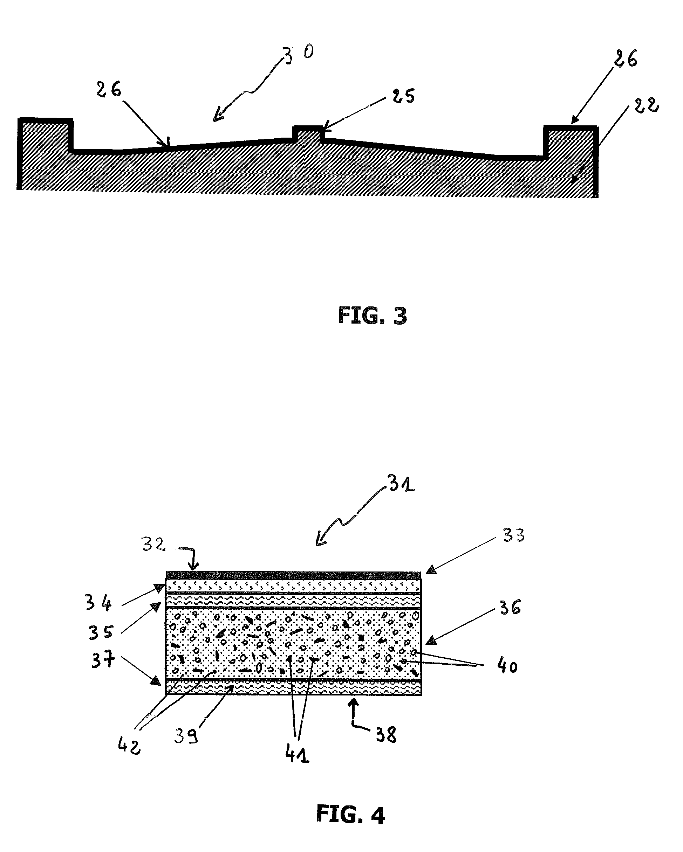

Comme schématisé sur la figure 4, l'exemple de structure 31 en matériau composite multicouche selon une deuxième variante de l'invention se compose du haut vers le bas, c'est-à-dire à partir de la surface extérieure 32 :
- d'une fine couche en polyurée 33 reposant sur deux couches 34 et 35 de mousse de polyuréthane à haute densité;
- d'une couche 36 en mousse de polyuréthane à haute densité formant l'âme de la structure et renfermant des granulats, cette couche 36 repose elle-même sur deux couches de mousse de polyuréthane haute densité 37 et 38.

Les deux couches de mousse de polyuréthane haute densité 35 et 37 entourant directement la couche 36 renferment des fibres 39, sous la forme d'un tissu de fibres de verre.

La couche 36 renferme des éléments de renfort qui peuvent être des billes 40 de polystyrène graphité, des broyats 41 de chutes de production et/ou de recyclage de plaques en ABS/PMMA et/ou du sable 42 fin (de granulométrie de préférence inférieure ou égale à 2 mm).

Ce matériau structurel peut reposer sur la face opposée à la surface extérieure 2, 32 sur sa face 11, 38 par exemple directement sur le sol, ou être équipée de pieds (non représentés).

A titre d'exemple dimensionnel non limitatif, la couche de polyurée 3 présente une épaisseur comprise entre 200 et 600 micromètres. Elle peut être colorée par incorporation d'un colorant et/ou d'un pigment. On peut également envisager de la recouvrir, après fabrication de l'article, d'une couche de peinture de type laque polyuréthane, permettant de proposer une plus grande variété de couleurs.

Les couches en mousse de polyuréthane à haute densité 4, 5, 7, 8, 34, 35 ou 37 présentent une épaisseur comprise entre 1,5 et 2 mm avec une densité voisine de 0,85.

La couche de mousse de polyuréthane de faible densité 6 (densité de l'ordre de 0,28) ou la couche 36 de mousse de polyuréthane à haute densité renfermant les granulats, formant respectivement l'âme des structures 1 ou 31 peut présenter une épaisseur comprise entre 10 et 30 mm. Cette épaisseur peut être variable et c'est sur cette couche que l'on peut jouer sur l'épaisseur finale de la structure 1 ou 31, par exemple, une épaisseur plus importante en périphérie que dans la zone centrale, notamment pour prévoir dans la zone centrale un orifice d'évacuation de l'eau de la douche. Ces couches 6, 36 incorporent environ 30 % (volume) de granulats 10, 40, 41, 42, présentant une taille comprise entre 3 mm et 5 mm dans leur plus grande dimension.

Les couches de mousse de polyuréthane à haute densité renferment des fibres, telles que des fibres de verre, dans des proportions comprises entre 3 et 6 % environ en volume. La longueur des brins de ces fibres 9 est comprise entre 10 et 15 mm environ.

Les structures 1 et 31, décrites dans les exemples ci-dessus, présentent une épaisseur totale inférieure à 4 cm.

Pour la réalisation de ces structures, peut être mis en oeuvre un moule tel que schématisé sur la figure 2 ou sur la figure 3.

Le moule 20 de la figure 2 est constitué d'une couche en silicone 21 reposant sur un cadre 22 constitué de plaques en contreplaqué dont les extrémités périphériques sont associées à des éléments de renfort 23 maintenus par des profilés 24. La couche en silicone est une silicone souple de 40 Shore A. Un tel matériau s'est avéré pouvoir conférer un aspect de surface final mat à la couche de polyurée. Des moules en aluminium ou en silicone rigide ont présenté quelques problèmes au démoulage.

Le moule 30 de la figure 3, de construction plus simple que celui de la figure 2, est constitué d'une couche de gelcoat 26 en matériau polyester ou époxy recouvrant un contrefort 22 qui peut être par exemple en résine de synthèse.

Ces moules sont destinés à préparer une structure 1 destinée à constituer un receveur de douche. La couche en silicone 21 ou celle en gelcoat 26et son contrefort 22 présentent une zone centrale renflée 25 correspondant à la zone du receveur destinée à recevoir la bonde d'évacuation de l'eau.

Les structures 1 et 31 ont été réalisées selon les schémas respectifs des figures 1 et 4 par applications (éventuellement par pulvérisation) successives et immédiates des différents constituants présentés ci-dessous (avec leurs références commerciales) pour former la superposition des différentes couches de polymères et ont été soumises à plusieurs tests présentés ci-après. La durée de fabrication d'un tel article sanitaire est d'environ 10 à 15 minutes, c'est-à-dire bien inférieure à celle des articles de l'art antérieur.

Après démoulage, le receveur est fixé à son emplacement définitif sur le sol par une colle ciment.

### Constituants (réactifs pour les polymères) :

Couche de Polyurée
   FREI LAKE :
      Isocyanate aliphatique Réf VDU22271-3-10 avec
      Résine Réf VDU22271-9-03 (Blanc) ou
      Résine Réf VDU22271-10-1 (Gris)
   EPAFLEX :
      Isocyanate EPAPROOF FFI 01 Réf FFI1010000 +
      Résine EPAPROOF FFI 01 Réf FFI R017035
Couche de Polyuréthane compact
   BASF:
      Isocyanate Réf ISO PMDI 92140 +
      Polyol Réf A-7-D 33.13.22.224 (247 R1)
Couche de Polyuréthane plus léger
   BASF:
      Isocyanate Réf ISO PMDI 92140 +
      Polyol Réf A-7-D 33.13.22.176 (247 R2)
   SIRTEK:
      Isocyanate Réf 1.STIG.1001 +
      Polyol Réf 1.STPG.MC01

### TESTS REALISES

### A - Test de résistance de la couche de polyurée à différents agents chimiques

Les tests ont été effectués selon la norme NF EN 14527 (d'octobre 2006).

Les agents chimiques testés étaient les suivants :
Famille des acides : Acide acétique (CH₃COOH), 10 % V/V
Famille des produits alcalins : Hydroxyde de sodium (NaOH), 5 % m/m
Famille des alcools : Ethanol (C₂H₅OH), 96 % V/V
Famille des agents de blanchiment : Hypochlorite de sodium (NaOCl), 5 % de chlore actif (Cl₂)
Famille des agents tâchants : Bleu de méthylène, 1 % m/m

Les solutions ont été préparées juste avant l'utilisation avec de l'eau désionisée et appliquées à une température de 23°C. Des gouttes des différentes solutions d'agents chimiques ont été laissées deux heures en contact à la surface de la couche de polyurée. Les zones testées ont été ensuite rincées à l'eau désionisée et l'aspect visuel a été noté.

On ne remarque aucune tâche résiduelle, ni voile, à la surface de la couche de polyurée lors des tests d'acides, de bases, d'agents de blanchiments et d'agents colorants. Pour l'alcool testé, celui-ci était très concentré et on note un voile terne visible en contre-jour.

La couche de polyurée présente donc une bonne résistance aux agents chimiques testés qui donnent notamment une indication de sa résistance aux produits d'entretien ou d'agents nettoyants couramment utilisés.

### B - Test de résistance de la couche de polyurée à l'usure mécanique

Après un test de brossage de la surface de la couche de polyurée au moyen d'une brosse à poils souples en présence d'un produit d'entretien sous une température de 38°C, la surface de la couche de polyurée présente très peu de micro-rayures après un test de 100 cycles, chaque cycle incluant 30 aller-retour de la brosse par minute soit 600 balayages aller-retour par cycle.

La couche de polyurée est ainsi résistante à la fois à une usure mécanique et à une résistance aux agents chimiques.

### C - Test de glissance

L'évaluation de la glissance est effectuée par une méthode d'essai décrite dans la norme française XP P 05-010 et basée sur le principe de l'angle d'inclinaison. Un opérateur marche en avant puis en arrière sur le receveur testé. Ce receveur est revêtu d'eau pour les tests en pieds nus. L'inclinaison de ce receveur augmente jusqu'à ce que l'opérateur détecte une amorce de glissade. C'est l'angle du receveur avec le sol à ce moment-là qui établit le classement. Un classement PN 6 (pieds nus) signifie que l'angle est supérieur ou égal à 6° et strictement inférieur à 12°.

Le seuil de glissance détecté avec un receveur selon l'invention correspond à un angle de 8,9° donc obtient un classement PN 6.

### D - Test de stabilité du fond du receveur

Ces tests destinés à simuler l'effet de charges sur différentes parties (fond et bord) du receveur ont été effectués selon la norme NF EN 15720 sur des receveurs de forme rectangulaire.

Les tests effectués sur le receveur réalisé selon une structure telle que présentée à la figure 1 satisfont aux différents critères de stabilité du fond, notamment de déformation sous charge de 100 Kg après 5 minutes puis déformation résiduelle après 10 minutes hors charge, à savoir des valeurs de déformation respectivement inférieures à 0,5 mm (donc inférieur à la valeur maximale requise de 2 mm) et à 0,1 mm (donc inférieure à la valeur maximale requise de 0,3 mm).

### E - Tests de résistance mécanique aux chocs

Différents tests ont été réalisés sur un receveur de dimension 80 x 180 mm et d'épaisseur totale de 25,8 mm :
- Un test "d'endurance" : une charge de 100 Kg simulant un talon de pied de surface d'environ 58 cm² est posée 1 à 2 secondes sur le receveur de douche. 10.000 cycles (10.000 poses) ont été réalisés. Selon les points de test, la déformation élastique est d'une amplitude comprise entre 0,12 et 0,25 mm.
- Un test "statique" : une charge de 130 Kg est posée sur le receveur simulant un talon de surface d'environ 58 cm² et laissée 1 heure. La déformation élastique selon les points est comprise entre 0,22 et 0,35 mm.
- Un test de choc : une charge de 50 Kg (type sac de sable) est placée au-dessus du receveur à une hauteur de 600 mm puis lâchée. On ne constate aucune fissure, ni déformation, ni dégradation visible à l'oeil nu sur la couche de polyurée, ni sur les différentes couches de polyuréthane.

Un descriptif du procédé de fabrication de la structure 31 selon la deuxième variante de réalisation de l'invention est détaillé ci-après :
Le constituant polyurée est tout d'abord appliqué sur la surface du moule au rouleau ou par projection. Cette étape est suivie d'une application immédiate par pulvérisation d'une épaisseur de résine polyuréthane haute densité, puis
   - soit de la pose d'un tissu de verre avec pulvérisation de résine polyuréthane haute densité puis imprégnation de la fibre au rouleau,
   - soit de projections combinées de résine polyuréthane haute densité et de fibre de verre de longueur d'environ 15 à 25 mm.

On a ainsi dans le moule les couches 33, 35 et 35 de la structure schématisée sur la figure 4.

Séparément on a préalablement préparé un mélange sable + billes de polystyrène graphité + résine polyuréthane haute densité selon le protocole suivant :
- 1ère étape : introduction dans un malaxeur des billes de polystyrène (40 volumes) + sable (7,5 volumes) + polyol polyuréthane (1,1 volume),
- 2ème étape : après avoir obtenu un mélange homogène, introduction de l'isocyanate de polyuréthane (0,9 volume).

Ce mélange est ensuite introduit dans le moule sur la couche 35, il va former la couche 36, âme de la structure. Sur cette couche 36 est immédiatement appliqué un tissu de verre sur lequel est pulvérisée la résine polyuréthane haute densité pour former la couche 39.

Pour un meilleur compactage de l'ensemble une mise sous presse (durée 20 à 30 minutes) peut être effectuée : le moule est alors recouvert d'un couvercle adapté et l'ensemble est introduit dans une presse. Cette opération permet notamment de compacter le mélange et d'imprégner la dernière couche de fibres.

Après démoulage, le pourtour de la structure 31 formant un receveur de douche est ébavuré à l'aide d'un outil tranchant.

Si nécessaire lors de l'installation, il peut être aisément découpé, en ne générant qu'une faible quantité de poussière.

## Revendications

1. Structure (1 ; 31) en matériau composite multicouche à base de polyurée et de polyuréthane, notamment pour la réalisation d'article sanitaire tel que receveur de douche, baignoire ou revêtement de sol ou mural, **caractérisée en ce qu'**elle comprend la superposition des couches suivantes :
- au moins une première couche (3) d'un matériau de type polyurée réalisée à partir d'un polyisocyanate et d'une résine polyamine,
- au moins une deuxième couche (4, 5, 7, 8) d'un matériau de type mousse de polyuréthane réalisée à partir d'un polyisocyanate et d'un polyol, et renfermant des éléments de renfort sous la forme de fibres,
- au moins une troisième couche (6) d'un matériau de type mousse de polyuréthane réalisée à partir d'un polyisocyanate et d'un polyol et renfermant des éléments de renfort sous la forme de granulats.

2. Structure (1 ; 31) en matériau composite multicouche selon la revendication 1, **caractérisée en ce qu'**elle comprend plusieurs dites deuxièmes couches (4, 5, 7, 8) en mousse de polyuréthane de haute densité, dont seules certaines renferment des fibres (9) de renfort.

3. Structure (1 ; 31) en matériau composite multicouche selon l'une quelconque des revendications précédentes, **caractérisée en ce que** les fibres (9) de renfort, tissées ou non tissées, sont choisies parmi des fibres de verre, des fibres de carbone, des fibres d'aramide ou un mélange de ces fibres.

4. Structure (1 ; 31) en matériau composite multicouche selon l'une quelconque des revendications précédentes, **caractérisée en ce que** les granulats (10) sont choisis parmi des granulats minéraux et/ou des granulats métalliques et/ou des granulats polymères, tels que des granulats obtenus par broyage de chutes de production ou de recyclage d'articles en matériaux polymères thermodurcissables ou thermoplastiques.

5. Structure (1 ; 31) en matériau composite multicouche selon l'une quelconque des revendications précédentes, **caractérisée en ce que** la taille des granulats est inférieure à 5 mm, de préférence comprise entre 3 mm et 5 mm.

6. Structure (1) en matériau composite multicouche selon l'une quelconque des revendications précédentes, **caractérisée en ce qu'**elle comprend la superposition des couches suivantes :
- au moins une première couche (3) d'un matériau de type polyurée réalisée à partir d'un polyisocyanate et d'une résine polyamine,
- au moins une deuxième couche (4, 5, 7, 8) d'un matériau de type mousse de polyuréthane de haute densité réalisée à partir d'un polyisocyanate et d'un polyol,
- au moins une troisième couche (6) d'un matériau de type mousse de polyuréthane de faible densité réalisée à partir d'un polyisocyanate et d'un polyol.

7. Structure (1) en matériau composite multicouche selon la revendication 6, **caractérisée en ce qu'**elle comporte une couche de mousse de polyuréthane faible densité, entourée de deux couches de mousse de polyuréthane à haute densité, l'une des couches de polyuréthane à haute densité étant revêtue, sur sa face opposée à la couche de mousse de polyuréthane faible densité d'une couche en matériau de type polyurée.

8. Structure (31) en matériau composite multicouche selon l'une quelconque des revendications 1 à 5, **caractérisée en ce que** ladite troisième couche (36) est un matériau de type mousse de polyuréthane de haute densité renfermant des granulats légers.

9. Structure en matériau composite multicouche selon la revendication 8, **caractérisée en ce que** les granulats légers (40) sont choisis parmi les granulats de polystyrène expansé, graphité ou non, d'argile expansée, de liège, ou d'un mélange de ceux-ci.

10. Structure en matériau composite multicouche selon la revendication 8 ou 9, **caractérisé en ce que** les granulats incorporés à ladite troisième couche comprennent une fraction de granulats légers (40) et une fraction de granulats lourds, de préférence de densité supérieure à la densité de la mousse de polyuréthane haute densité dans laquelle ils sont incorporés.

11. Structure en matériau composite multicouche selon l'une quelconque des revendications 8 à10, **caractérisée en ce qu'**elle comporte une couche de mousse de polyuréthane renfermant des granulats légers, entourée de deux couches de mousse de polyuréthane à haute densité renfermant des fibres tissées, dont l'une des couches est revêtue, sur sa face opposée à la couche de polyuréthane à granulats légers, d'une couche en matériau de type polyurée.

12. Article sanitaire, tel que receveur de douche, vasque, lavabo, baignoire ou revêtement de sol ou revêtement mural, formé d'une structure (1 ; 31) en matériau composite multicouche selon l'une quelconque des revendications précédentes, **caractérisé en ce que** ladite première couche (3 ; 33) en matériau de type polyurée constitue la couche extérieure.

13. Procédé de fabrication d'une structure composite multicouche selon l'une quelconque des revendications 1 à 11 ou de l'article sanitaire selon la revendication 12, par application, dans un moule ouvert, de ses matériaux constitutifs, comprenant les étapes successives suivantes :
- pulvérisation d'un premier polyisocyanate, de préférence un polyisocyanate aliphatique, et d'une résine polyamine pour former au moins une première couche en résine polyurée à la surface du moule,
- pulvérisation, sur ladite première couche, d'au moins un deuxième polyisocyanate et d'un polyol pour former au moins une deuxième couche d'un matériau en mousse de polyuréthane à haute densité, avec incorporation des éléments de renfort sous forme de fibres,
- application, sur ladite deuxième couche, d'au moins un troisième polyisocyanate et d'un polyol mélangé aux granulats pour former au moins une troisième couche d'un matériau en mousse de polyuréthane,
- séchage de l'ensemble et démoulage du matériau multicouche.

14. Procédé selon la revendication 13, **caractérisé en ce que** la pulvérisation ou l'application des polyisocyanates et des polyols pour former les couches de mousse de polyuréthane a lieu immédiatement après l'application de la couche précédente et avant le séchage de cette dernière.

15. Procédé selon l'une des revendications 13 ou 14, **caractérisé en ce que** le moule est un moule en élastomère, de préférence en élastomère de silicone souple.

16. Procédé selon l'une des revendications 13 ou 14, **caractérisé en ce que** le moule est un moule rigide, tel qu'un moule en résine de polyester, en résine époxy ou en aluminium.
